(19) **Europäisches Patentamt**

**European Patent Office**

**Office européen des brevets**

(11) **EP 0 963 514 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **98909322.4**

(22) Anmeldetag: **03.02.1998**

(51) Int Cl.⁷: **F02D 41/38**

(86) Internationale Anmeldenummer:
**PCT/DE98/00298**

(87) Internationale Veröffentlichungsnummer:
**WO 98/38423 (03.09.1998 Gazette 1998/35)**

(54) **VERFAHREN ZUR REGELUNG EINER REGELGRÖSSE MIT EINEM BEGRENZTEN REGLEREINGRIFF**

METHOD FOR REGULATING A CONTROLLED VARIABLE WITH LIMITED CONTROLLER INTERVENTION

PROCEDE POUR REGULER UNE GRANDEUR AVEC UNE INTERVENTION LIMITEE DU REGULATEUR

(84) Benannte Vertragsstaaten:
**DE FR GB IT**

(30) Priorität: **28.02.1997 DE 19708308**

(43) Veröffentlichungstag der Anmeldung:
**15.12.1999 Patentblatt 1999/50**

(73) Patentinhaber: **SIEMENS AKTIENGESELLSCHAFT 80333 München (DE)**

(72) Erfinder:
• **HARTKE, Andreas D-80807 München (DE)**
• **PRZYMUSINSKI, Achim D-93049 Regensburg (DE)**

(56) Entgegenhaltungen:
EP-A- 0 735 268          WO-A-96/03577
WO-A-97/43543          US-A- 5 121 604

• **Patent Abstracts of Japan, Band 14, Nr 501(M-1043) 2 November 1990; & JP,A,02207912 (YASKAWA ELECTRIC MFG CO LTD), 1990-08-17**

## Beschreibung

Die Erfindung betrifft ein Verfahren zum Regeln einer Regelgröße gemäß dem Oberbegriff des Anspruchs 1.

Verfahren zum Regeln einer Regelgröße werden in den verschiedensten technischen Bereichen eingesetzt und spielen insbesondere in der Kraftfahrzeugtechnik eine besondere Rolle. Bei der Regelung einer Regelgröße treten insbesondere bei einer größeren Änderung der Regelgröße Probleme beim Nachregeln auf.

Die US-A- 5 467 000 (Fig. 1) offenbart :
der Sollwert i*sp des Regelkreises eines Stellglieds dient zur Berechnung eines Vorsteuerwerts 20 und der gleiche Sollwert i*sp wird mit dem istWert isp dem Regler 12 zugeleitet, dessen begrenzter Ausgang bei 16 mit dem Vorsteuerwert zu einem Regeleingriff kombiniert wird.

Der Reglerausgang ist immer begrenzt und daher auch dann, wenn sich der Sollwert ändert.

Die Aufgabe der Erfindung beruht darin, ein Verfahren zur Regelung einer Regelgröße bereitzustellen, bei dem die Regelung auch bei einer Änderung der Regelgröße präzise durchgeführt wird.

Die Aufgabe der Erfindung wird durch die Merkmale des Anspruchs 1 gelöst. Besonders vorteilhaft ist es, bei der Regelung der Regelgröße den Reglereingriff auf einen Grenzwert zu begrenzen.

Weitere vorteilhafte Ausbildungen und Verbesserungen sind in den Unteransprüchen angegeben.

Die Erfindung wird anhand der Figuren näher erläutert;
es zeigen:

Figur 1    eine Einspritzanlage mit einem Druckregelventil,
Figur 2    ein Druckregelventil,
Figur 3    das Tastverhältnis des Ansteuersignales für das Druckregelventil in Abhängigkeit vom Kraftstoffdruck,
Figur 4    eine relative Tastverhältnisdifferenz in Abhängigkeit vom Kraftstoffdruck, und
Figur 5    ein Regelverfahren.

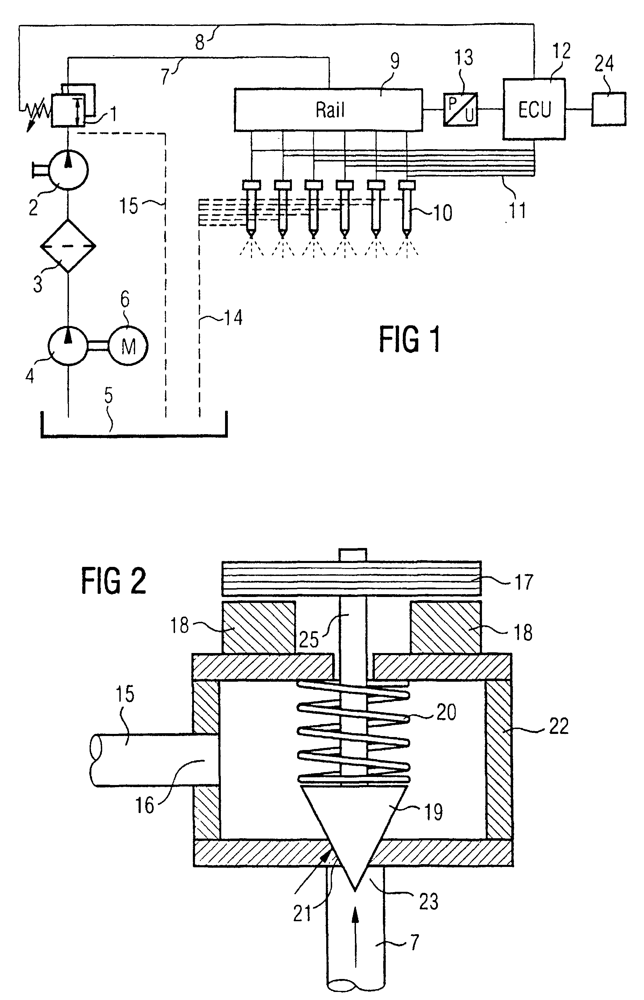

Figur 1 zeigt eine Vorförderpumpe 4, die von einem Motor 6 angetrieben wird und Kraftstoff aus einem Kraftstofftank 5 über einen Filter 3 zu einer ansteuerbaren Hochdruckpumpe 2 befördert. Die Hochdruckpumpe 2 verdichtet den zugeführten Kraftstoff auf einen vorgegebenen Druck und führt den verdichteten Kraftstoff über eine Hochdruckleitung 7 einem Kraftstoffspeicher 9 zu. Der Kraftstoffspeicher 9 ist über Kraftstoffleitungen mit Injektoren 10 verbunden, die über Steuerleitungen 11 an ein Steuergerät 12 angeschlossen sind. Die Injektoren 10 sind über eine Leckageleitung 14 mit dem Kraftstofftank 5 verbunden. Das Steuergerät 12 verfügt über einen Datenspeicher 24.

Der Kraftstoffspeicher 9 weist einen Drucksensor 13 auf, der mit dem Steuergerät 12 über eine Signalleitung in Verbindung steht. Das Steuergerät 12 ist über eine Ansteuerleitung 8 mit einem Druckregelventil 1 verbunden, das in der Hochdruckleitung 7 eingebracht ist. Das Druckregelventil 1 ist über eine Rückleitung an den Kraftstofftank 5 angeschlossen.

Die Anordnung nach Figur 1 funktioniert wie folgt: Der Kraftstoff wird über die Vorförderpumpe 4, das Filter 3, die Hochdruckpumpe 1 und die Hochdruckleitung 7 zum Kraftstoffspeicher 9, einem Common-Rail, befördert, und davon über die Injektoren 10 in entsprechende Brennräume einer Brennkraftmaschine eingespritzt. Das Einspritzverfahren wird vom Steuergerät 12 nach vorgegebenen Verfahren und in Abhängigkeit von Betriebsbedingungen des Kraftfahrzeuges oder der Brennkraftmaschine durchgeführt.

Unterschiedliche Betriebsbedingungen der Brennkraftmaschine wie z.B. Leerlauf, Vollast oder Schub erfordern einen unterschiedlich hohen Kraftstoffdruck im Kraftstoffspeicher 9. Dazu mißt das Steuergerät 12 den Kraftstoffdruck im Kraftstoffspeicher 9 und regelt den Kraftstoffdruck über eine entsprechende Ansteuerung des Druckregelventiles 1.

Figur 2 zeigt schematisch den Aufbau eines Druckregelventiles, das in diesem Fall elektromagnetisch betätigbar ist. Das Druckregelventil 1 weist ein Gehäuse 22 auf, in das eine Zuflußöffnung 23 und eine Abflußöffnung 16 eingebracht sind. Die Zuflußöffnung 23 ist an der Hochdruckleitung 7 und die Abflußöffnung 16 an der Rückleitung 15 angeschlossen. Die Zuflußöffnung 23 ist als Dichtsitz 21 ausgebildet, in den ein an den Dichtsitz 21 angepaßter Ventilkörper 19 eingebracht ist. Der Ventilkörper 19 wird von einer Ventilfeder 20, die zwischen dem Gehäuse 22 und dem Ventilkörper 19 angeordnet ist, gegen den Dichtsitz 21 gepreßt ist. Der Ventilkörper 19 ist über eine Stange 25 mit einem Anker 17 verbunden, der außerhalb des Gehäuses 22 angeordnet ist. Zudem ist zwischen dem Anker 17 und dem Gehäuse 22 eine, vom Steuergerät 12 ansteuerbare Spule 18 vorgesehen.

Die Funktionsweise des Druckregelventiles 1 ist wie folgt: Im Ruhezustand wird die Spule 18 nicht angesteuert und der Ventilkörper 19 wird nur von der Ventilfeder 20 mit einer vorgegebenen Federkraft auf den Dichtsitz 21 gedrückt. Somit hebt der in der Hochdruckleitung 7 herrschende Kraftstoffdruck den Ventilkörper 19 vom Dichtsitz 21 ab, sobald der Kraftstoffdruck über die Federkraft der Ventilfeder 20 steigt. Hebt der Ventilkörper 19 vom Dichtsitz 21 ab, so fließt Kraftstoff von der Hochdruckleitung 7 über das Druckregelventil 1 und die Rückleitung 15 zum Kraftstofftank 5 zurück. Auf diese Weise wird der im Kraftstoffspeicher 9 herrschende Kraftstoffdruck erniedrigt.

Durch eine entsprechende Ansteuerung der Spule 18 legt das Steuergerät 12 den Druck fest, ab dem der Ventilkörper 19 vom Dichtsitz 21 abgehoben wird. Auf diese Weise stellt das Steuergerät 12 den Kraftstoffdruck im Kraftstoffspeicher 9 ein. Zur Ansteuerung der Spule 18 wird vorzugsweise ein pulsweitenmoduliertes Ansteuersignal verwendet.

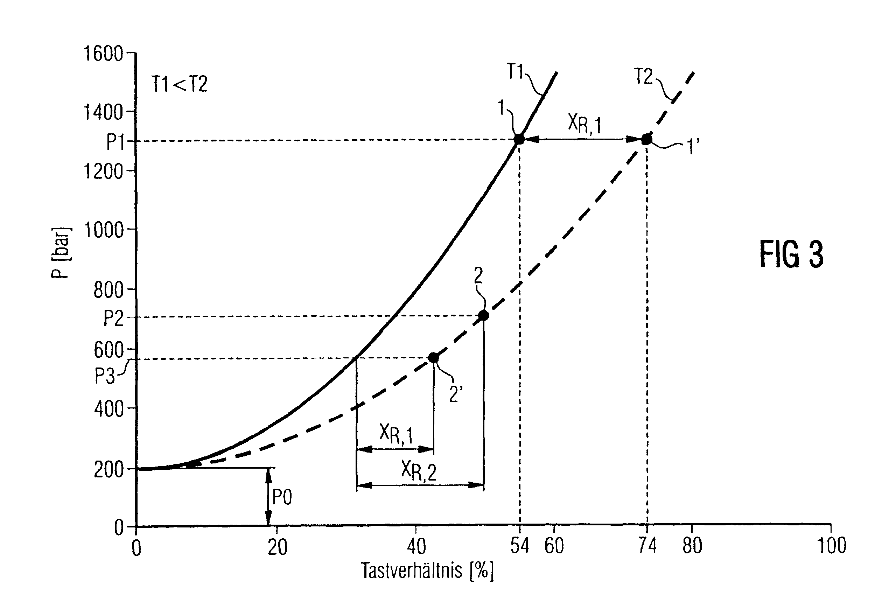

Figur 3 zeigt das Tastverhältnis des pulsweitenmodulierten Ansteuersignals, mit dem das Steuergerät 12 das Druckregelventil 1 ansteuert, in Abhängigkeit vom Kraftstoffdruck , bei dem das angesteuerte Druckregelventil 1 öffnet und Kraftstoff an den Kraftstofftank 5 zurückgibt. In Figur 3 sind die Tastverhältnisse für zwei verschiedene Temperaturen T1 und T2 des Druckregelventils 1 angegeben, wobei die erste Temperatur T1 kleiner als die zweite Temperatur T2 ist. Aus Figur 3 ist ersichtlich, daß bei einer höheren Temperatur T2 des Druckregelventils, insbesondere der Spule 18, ein größeres Tastverhältnis für das Ansteuersignal des Druckregelventils 1 vorgegeben werden muß, damit das Druckregelventil 1 beim gleichen Kraftstoffdruck wie bei der niedrigeren Temperatur T1 öffnet. Dies ist dadurch zu erklären, daß bei einer höheren Temperatur T2 der Widerstand der Spule 18 steigt und damit für den gleichen Stromfluß wie bei einer niedrigeren Temperatur T1 ein größeres Tastverhältnis gewählt werden muß. Die Kennlinie, die für die Temperatur T1 gezeigt ist, entspricht den Tastverhältnissen, die durch Vorsteuerwerte $X_v$ festgelegt ist und wird deshalb als Vorsteuerkennlinie bezeichnet. Die Vorsteuerkennlinie mit den entsprechenden Vorsteuerwerten $X_v$ wird experimentell ermittelt und im Datenspeicher 24 abgelegt. Die Kennlinie für die zweite Temperatur T2 wird durch einen entsprechenden Reglereingriff $X_{R,i}$ ausgehend von den Vorsteuerwerten eingestellt.

In Figur 3 ist erkennbar, daß die von der Ventilfeder 20 vorgegebene Federkraft einem minimalen Kraftstoffdruck PO von 200 bar entspricht. Das Druckregelventil 1 öffnet somit auch ohne eine Ansteuerung durch das Steuergerät 12 erst bei einem Kraftstoffdruck von 200 bar.

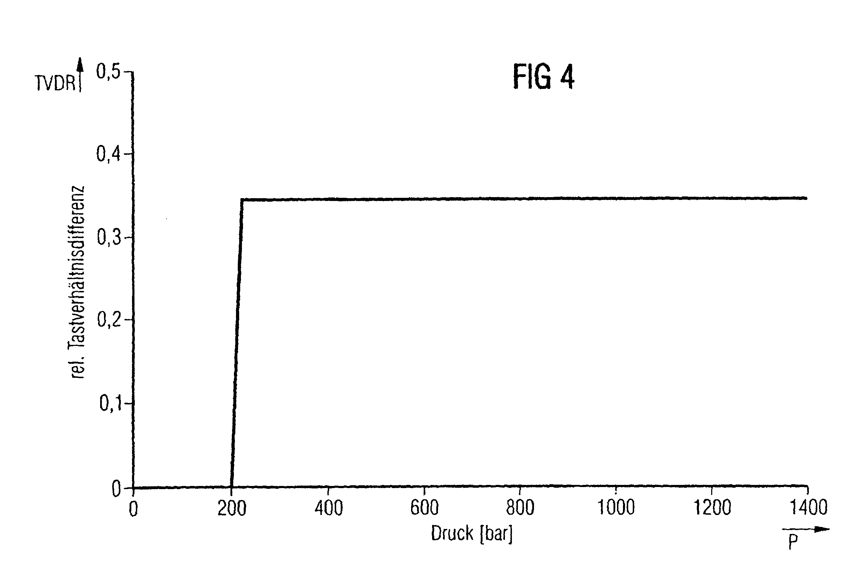

Figur 4 zeigt die relative Tastverhältnisdifferenz in Abhängigkeit vom Kraftstoffdruck. Die relative Tastverhältnisdifferenz TVDR ist definiert als der Koeffizient aus der Tastverhältnisdifferenz TVD bezogen auf den Vorsteuerwert $X_v$ bei der ersten Temperatur T1: $TVDR = = TVD/X_v(T1)$.

Mit Tastverhältnisdifferenz TVD ist die Differenz zwischen dem Tastverhältnis TV(P1,T1) bei einem vorgegebenen ersten Kraftstoffdruck P1 und einer vorgegebenen ersten Temperatur T1 und dem Tastverhältnis TV(P1,T2) bei dem ersten Kraftstoffdruck P1 und einer zweiten Temperatur T2:

$$TVD=TV(P1,T2)-TV(P1,T1),$$

Aus Figur 4 ist erkennbar, daß im Anfangsbereich ab 200 bar Kraftstoffdruck die relative Tastverhältnisdifferenz TVDR sprunghaft auf einen Wert zwischen 0,3 und 0,4 ansteigt und dann über den weiteren Kraftstoffdruckbereich konstant bleibt. Das bedeutet, daß die Abweichung im Tastverhältnis für zwei verschiedene Temperaturen bezogen auf den Vorsteuerwert einen konstanten Wert darstellt. Dieses Verhalten wird vorzugsweise bei dem erfindungsgemäßen Regelverfahren eingesetzt.

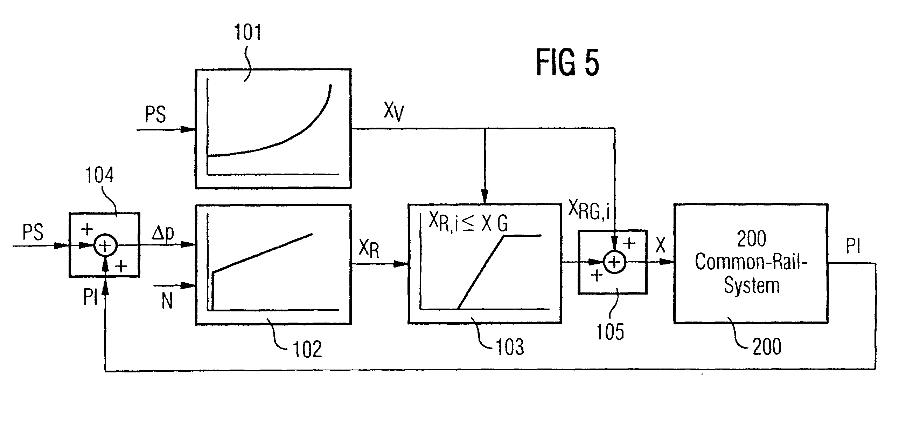

Figur 5 zeigt schematisch den Aufbau eines Regelverfahrens, mit dem das Steuergerät 12 das Druckregelventil 1 in Abhängigkeit vom Kraftstoffdruck im Kraftstoffspeicher 9 und in Abhängigkeit von der Temperatur des Druckregelventils 1 ansteuert.

Das Steuergerät 12 ermittelt in Abhängigkeit von den Betriebsbedingungen der Brennkraftmaschine insbesondere von der Last, der Drehzahl und dem Fahrerwunsch einen Solldruck PS, der im Kraftstoffspeicher 9 eingestellt werden soll. Der Solldruck PS wird im Reglerblock 104 mit dem im Kraftstoffspeicher 9 gemessenen Druck PI verglichen und ein Differenzdruck $\Delta p$ ermittelt. Der Differenzdruck $\Delta p$ wird im Reglerblock 102 dazu verwendet, um nach einer vorgegebenen Berechnungsvorschrift einen Reglereingriff $X_{R,i}$ zu berechnen:

$$x_{R,i} = x_{R,i-1} + K_R\left[\Delta p_i - \left(1 - \frac{T_A}{T_I}\right)\Delta p_{i-1}\right],$$

wobei mit $K_R$ ein Verstärkungsfaktor, mit $T_A$ die Abtastzeit und mit $T_I$ eine vorgegebene Nachstellzeit bezeichnet sind. Mit $X_{R,i}$ ist der Reglereingriff zum Zeitpunkt i, mit $X_{R,i-1}$ ist der Reglereingriff zum Zeitpunkt i-1, mit $\Delta p_i$ die Regelabweichung zum Zeitpunkt i und mit $\Delta p_{i-1}$ die Regelabweichung zum Zeitpunkt i-1 bezeichnet.

Die Abtastzeit $T_A$ ist abhängig von der Drehzahl N der Brennkraftmaschine und vorzugsweise proportional der Drehzahl N. Der ermittelte Regeleingriff $X_{R,i}$ wird anschließend beim Reglerblock 103 auf einen Grenzwert $X_G$ begrenzt. Dabei wird der Reglereingriff $X_{R,i}$ in Abhängigkeit vom Vorsteuerwert $X_v$ auf einen Grenzwert $X_G$ begrenzt: $X_{R,i} \leq X_G$. Der Grenzwert $X_G$ hängt vorzugsweise vom Vorsteuerwert $X_v$ ab: $X_G = C \cdot X_v$, wobei mit C ein Begrenzungsfaktor bezeichnet ist, der eine Konstante darstellt und experimentell ermittelt wird. Die Abtastzeit $T_A$ beträgt beispielsweise 0,002 s, die Nachstellzeit $T_I$ 0,07 s und der Verstärkungsfaktor $K_R$ 0,035 %/MPa.

Der Vorsteuerwert $X_V$ wird unter Verwendung des Solldruckes PS vom Steuergerät 12 beim Reglerblock 101 aus einer vorgegebenen Kennfeld ausgelesen, das Vorsteuerwerte $X_V$ in Abhängigkeit vom Solldruck PS angibt.

Nach der Begrenzung des Reglereingriffes $X_{R,i}$ beim Reglerblock 103 wird der begrenzte Reglereingriff $X_{RG,i}$ beim Reglerblock 105 mit dem beim Reglerblock 101 ermittelten Vorsteuerwert $X_V$ zu einem Stellwert X addiert werden, der dann beim Reglerblock 200 vom Steuergerät 12 dem Druckregelventil 1 zugeführt wird. Als Rückkopplung mißt das Steuergerät 12 den im Kraftstoffspeicher 9 vorherrschenden Kraftstoffdruck PI und führt diesen zum Reglerblock 104 zu.

Die besondere Funktionsweise des beschriebenen Reglerverfahrens beruht darin, daß der Reglereingriff $X_{R,i}$ auf einen Grenzwert begrenzt wird. Der Grenzwert ist vorzugsweise direkt proportional zum Vorsteuerwert, der zusammen mit dem Reglereingriff den Stellwert bildet.

Eine vorzugsweise Ausbildung der Reglerbegrenzung beruht darin, daß der Grenzwert $X_G$ in relativer Form vom Vorsteuerwert $X_V$ und damit vom Solldruck PS abhängt.

Zudem beruht eine vorteilhafte Ausbildung der Reglerbegrenzung darin, den Grenzwert in Abhängigkeit von Betriebsbedingungen des Fahrzeuges, insbesondere der Drehzahl, der Einspritzmenge, von einem Notlaufbetrieb oder der Kühlmitteltemperatur auszubilden, da die über das Druckregelventil abgeführte Kraftstoffmenge und damit die Öffnungsweite des Druckregelventils vom Lastpunkt der Brennkraftmaschine abhängen. Entsprechende Abhängigkeiten werden experimentell ermittelt und im Datenspeicher 24 abgelegt.

Der Begrenzungsblock 103 hat die Aufgabe, den Temperatureinfluß auf das Ansteuersignal, der sich in der Größe des Reglereingriffes $X_{R,i}$ wiederspiegelt, auf einen Grenzwert, insbesondere auf ein relatives Verhältnis zum Vorsteuerwert $X_V$ zu begrenzen.

Die Auswirkungen des erfindungsgemäßen Regelverfahrens der Figur 6 werden anhand der Figur 3 erläutert: Das Steuergerät 12 steuert zum Zeitpunkt 1, bei dem das Druckregelventil 1 eine erste Temperatur T1 aufweist, gemäß dem Fahrerwunsch, d.h. der Gaspedalstellung, den gewünschten Arbeitspunkt 1 so an, daß ein Kraftstoffdruck von ungefähr 1300 bar im Kraftstoffspeicher 9 gehalten wird. Wird der Arbeitspunkt 1 vom Fahrer über einen längeren Zeitraum beibehalten, dann steigt infolge der Energieumwandlung im Druckregelventil 1 die Temperatur des Druckregelventils 1 von der ersten Temperatur T1 auf eine zweite Temperatur T2, die größer als die erste Tempoeratur T1 ist.

Da das Steuergerät 12 das Druckregelventil 1 nachregelt, wird bei einem konstanten Vorsteuerwert der Reglereingriff $X_{R,1}$ vegrößert, da bei einer zweiten Temperatur T2 ein größeres Tastverhältnis zur Ansteuerung des Druckregelventils notwendig ist, um den vorgegebenen ersten Kraftstoffdruck P1 einzustellen. Bei dem Arbeitspunkt 1 bei einer Temperatur T1 reicht ein Tastverhältnis von 54% aus, wohingegen bei dem Arbeitspunkt 1' bei der zweiten Temperatur T2 für den Kraftstoffdruck von 1300 bar ein Tastverhältnis von 74% notwendig ist, um das Druckregelventil 1 entsprechend zu steuern.

Bei einer Veränderung des Arbeitspunktes zu einem niedrigeren, dritten Kraftstoffdruck P3 fährt das System bei Verwendung eines nicht begrenzten Reglereingriffes aufgrund des noch vorhandenen großen Reglereingriffs als erstes den zweiten Kraftstoffdruck P2 am Arbeitspunkt 2 an, da noch der Reglereingriff $X_{R,1}$ vorliegt. Eine Veränderung des Arbeitspunktes wird beispielsweise durch einen Lastwechsel der Brennkraftmaschine erzeugt. Durch den zu großen Reglereingriff $X_{R,1}$ stellt das Steuergerät 12 mit dem Arbeitspunkt 2 einen zu großen zweiten Kraftstoffdruck P2 ein.

Erst bei der nächsten Berechnung des Tastverhältnisses wird ein neuer zweiter Reglereingriff $X_{R,2}$ berechnet, der dem tatsächlich anzufahrenden dritten Kraftstoffdruck P3 am Arbeitspunkt 2' entspricht.

Durch die Begrenzung des Reglerausganges auf ein festes, vom Temperaturgang des Druckregelventils und damit von festen Stoffwerten abhängiges Verhältnis zum Vorsteuerwert wird der Reglereingriff unmittelbar bei der Veränderung des Solldrukkes über die gleichzeitige Veränderung des Vorsteuerwertes auf den Betrag $X_{R,i} = X_{RG,i}$ reduziert und das System somit auf direktem Weg zum Arbeitspunkt 2' geführt. Die Phase der unerwünschten Drucküberhöhung wird auf diese Weise vermieden. Vorzugsweise wird der Reglereingriff in Abhängigkeit vom Vorsteuerwert und damit in Abhängigkeit vom Solldruck begrenzt.

Besonders vorteilhaft ist das erfindungsgemäße Verfahren bei abrupten Änderungen der Arbeitspunkte, d.h. bei einer abrupten Änderung des Sollwertes PS für den Kraftstoffdruck. Es wird wird eine Reglerbegrenzung durchgeführt, wenn sich der Solldruck PS(i) von einem Berechnungsschritt i zum nächsten Berechnungsschritt i+1 um einen vorgegebenen Wert auf einem Solldruck PS(i+1) ändert, der vorzugsweise um mehr als 5% größer als der Solldruck PS(i) ist.

Das vorgestellte Verfahren zur Kompensation des Temperaturganges des Druckregelventils ist unabhängig von der Art des verwendeten Reglers. Da ausschließlich die Charakteristik des Druckregelventils 1 berücksichtigt wird, kann dieses Verfahren bei jedem Speichereinspritzsystem zur Anwendung kommen, das über ein entsprechendes Druckregelventil verfügt. Dies ist auch dann möglich, wenn ein Volumenstromregelventil für die Hochdruckpumpe eingesetzt wird oder die Vorförderpumpe elektrisch geregelt wird.

**Patentansprüche**

1. Verfahren zum Regeln eines Stellgliedes (1),

   - bei dem aus einem Sollwert (PS) ein Vorsteuerwert ($X_v$) ermittelt wird,
   - bei dem aus einem Istwert (PI) und dem Sollwert (PS) der Regelgröße ein Reglereingriff ($X_{R,i}$) ermittelt wird,
   - bei dem aus dem Vorsteuerwert ($X_v$) und dem Reglereingriff ($X_{RG,i}$) ein Stellwert (X) ermittelt wird, mit dem das Stellglied (1,200) angesteuert wird,

   **dadurch gekennzeichnet**

   - **daß** der Reglereingriff ($X_{R,i}$) genau dann auf einen Grenzwert ($X_G$) begrenzt wird, wenn sich der Sollwert (PS) um mehr als einen vorgegebenen Wert, vorzugsweise um mehr als 5% des Sollwerts (PS), ändert.

2. Verfahren nach Anspruch 1, **dadurch gekennzeichnet, daß** der Grenzwert ($X_G$) vom Vorsteuerwert ($X_V$) abhängt, insbesondere direkt proportional zum Vorsteuerwert ($X_V$) ist.

3. Verfahren nach einem der Ansprüche 1 oder 2, **dadurch gekennzeichnet, daß** als Stellglied ein Druckregelventil (1) eines Kraftstoffspeichers (9) geregelt wird.

4. Verfahren nach Anspruch 3, **dadurch gekennzeichnet, daß** der Grenzwert von Betriebsbedingenungen eines Kraftfahrzeuges, insbesondere von der Drehzahl, der Einspritzmenge, einem Notlaufbetrieb oder von der Kühlmitteltemperatur, abhängt.

5. Verfahren nach einem der vorhergehenden Ansprüche, **dadurch gekennzeichnet, daß** der Grenzwert ($X_G$) vom Sollwert (PS) abhängt.

6. Verfahren nach Anspruch 3, **dadurch gekennzeichnet, daß** das Druckregelventil (1) zur Regelung eines Kraftstoffdruckes in einem Kraftstoffspeicher (9) verwendet wird, und daß der Reglereingriff ($X_{R,i}$) auf einen Grenzwert ($X_G$) begrenzt wird, der vom Kraftstoffdruck (PS) abhängt.


**Claims**

1. Method of controlling an actuator (1),

   - in which a pilot control value ($X_V$) is determined from a desired value (PS),
   - in which a controller action ($X_{R,i}$) is determined from an actual value (PI) and the desired value (PS) of the controlled variable,
   - in which an actuating value (X), with which the actuator (1,200) is driven, is determined from the pilot control value ($X_v$) and the controller action ($X_{RG,i}$),

   **characterized in that**

   - the controller action ($X_{R,i}$) is limited to a limiting value ($X_G$) precisely when the desired value (PS) changes by more than a predefined value, preferably by more than 5% of the desired value (PS).

2. Method according to Claim 1, **characterized in that** the limiting value ($X_G$) depends on the pilot control value ($X_v$), in particular being directly proportional to the pilot control value ($X_v$).

3. Method according to either of Claims 1 and 2, **characterized in that** the actuator controlled is a pressure regulating valve (1) of a fuel reservoir (9).

4. Method according to Claim 3, **characterized in that** the limiting value depends on operating conditions of a motor vehicle, in particular on the engine speed, the injection quantity, emergency running operation or on the coolant temperature.

5. Method according to one of the preceding claims, **characterized in that** the limiting value ($X_G$) depends on the desired value (PS).

6.  Method according to Claim 3, **characterized in that** the pressure regulating valve (1) is used to control a fuel pressure in a fuel reservoir (9), and **in that** the controller action $(X_{R,i})$ is limited to a limiting value $(X_G)$ which depends on the fuel pressure (PS).

**Revendications**

1.  Procédé de régulation d'un vérin (1),

    -   dans lequel une valeur de commande $(X_v)$ est déterminée à partir d'une valeur théorique (PS),
    -   dans lequel à partir d'une valeur effective (PI) et de la valeur théorique (PS) de la grandeur, une intervention du régulateur $(X_{R,i})$ est déterminée,
    -   dans lequel à partir de la valeur de commande $(X_v)$ et de l'intervention du régulateur $(X_{RG,i})$ une valeur de réglage (X) est déterminée, avec laquelle le vérin (1,200) est commandé,

    **caractérisé en ce**

    -   **que** l'intervention du régulateur $(X_{R,i})$ est ensuite limitée exactement à une valeur limite $(X_G)$, lorsque la valeur théorique (PS) se modifie de plus d'une valeur prédéfinie, de préférence de plus de 5% de la valeur théorique (PS).

2.  Procédé selon la revendication 1, **caractérisé en ce que** la valeur limite $(X_G)$ dépend de la valeur de commande $(X_v)$, en étant notamment directement proportionnelle à la valeur de commande $(X_v)$.

3.  Procédé selon l'une des revendications 1 ou 2, **caractérisé en ce que** comme vérin une soupape de réduction de pression (1) d'un réservoir à carburant (9) est régulée.

4.  Procédé selon la revendication 3, **caractérisé en ce que** la valeur limite dépend des conditions de fonctionnement d'un véhicule, notamment de la vitesse de rotation, de la quantité injectée, d'un fonctionnement en urgence ou de la température du liquide de refroidissement.

5.  Procédé selon l'une des revendications précédentes, **caractérisé en ce que** la valeur limite $(X_G)$ dépend de la valeur théorique (PS).

6.  Procédé selon la revendication 3, **caractérisé en ce que** la soupape de réduction de pression (1) est utilisée pour réguler une pression du carburant dans un réservoir à carburant (9), et **en ce que** l'intervention du régulateur $(X_{R,i})$ est limitée à une valeur limite $(X_G)$, qui dépend de la pression du carburant (PS).

FIG 1

FIG 2

FIG 3

FIG 4

EP 0 963 514 B1

FIG 5

EP 0 963 514 B1